# EUROPÄISCHE PATENTSCHRIFT

(11) **EP 1 651 051 B1**
(45) Veröffentlichungstag und Bekanntmachung des Hinweises auf die Patenterteilung: **29.11.2006**
(21) Anmeldenummer: 04737367.5
(22) Anmeldetag: 01.07.2004
(51) Int. Cl.: A21C 3/00

(54) **VORRICHTUNG UND VERFAHREN ZUR TEIGSCHONENDEN HERSTELLUNG EINES TEIGSTRANGES**
DEVICE AND METHOD FOR GENTLY PRODUCING A PASTRY STRAND
DISPOSITIF ET PROCÉDÉ DE PRODUCTION D'UN BOUDIN DE PÂTE SANS ABIMER LA PÂTE

(30) Priorität: 04.08.2003 AT 12292003
(43) Veröffentlichungstag der Anmeldung: 03.05.2006
(73) Patentinhaber: König Maschinen Gesellschaft mbH, 8045 Graz (AT)
(72) Erfinder: RAUCH, Eduard, A-8321 St. Margareten (AT); MARTIN, Walter, A-8045 Graz (AT)
(74) Vertreter: Wildhack, Helmut
(86) Internationale Anmeldenummer: PCT/AT2004/000237
(87) Internationale Veröffentlichungsnummer: WO 2005/011386

(56) Entgegenhaltungen:
- DE-A- 19 621 286
- DE-A- 19 757 311
- DE-C- 61 479
- FR-A- 2 591 071
- JP-A- 52 066 651
- US-A- 4 453 906
- US-A- 5 458 055
- US-A1- 2002 075 751
- PATENT ABSTRACTS OF JAPAN Bd. 1999, Nr. 04, 30. April 1999 (1999-04-30) & JP 11 004650 A (KAYSEVEN CO LTD), 12. Januar 1999 (1999-01-12)

## Beschreibung

Die Erfindung bezieht sich auf eine Vorrichtung zur teigschonenden Herstellung eines Teigstranges aus einer in einem zur Drehbewegung um seine Achse angetriebenen Behälter befindlichen Teigmasse, für die der Behälter unten eine Ausflussöffnung hat. Weiters bezieht sich die Erfindung auf ein Verfahren zur teigschonenden Teigbandherstellung.

Vorrichtungen zur Teigstrangherstellung sind in zahlreichen Ausführungsformen bekannt. Gemäß US 5,888,573 A ist an die Ausflussöffnung eines Teigtrichters zumindest ein Rollenpaar angeschlossen, dessen Rollen eine periodische Bewegung aufeinander zu bzw. voneinander weg durchführen. Dadurch lässt sich zwar ein Teigband herstellen, aber der Teig wird periodisch gedrückt, was zumindest für empfindliche Teigsorten unerwünscht ist. Es ist auch bekannt (EP 845 212 B), eine langgestreckte Teigmasse in eine Mehrzahl von Teigportionen zu unterteilen, die hierauf zu einem kontinuierlichen Teigstreifen wieder verbunden werden. Diese Bauweise hat die Nachteile eines hohen konstruktiven Aufwandes und infolge der miteinander verbundenen Teigportionen einer schlechten Teigstrangqualität.

Weiters sind aus DE 196 21 286 A1, EP 30 481 A1 und FR 2 501 364 A1 Vorrichtungen bekannt, bei denen der Behälter zur Drehung um seine Achse angetrieben wird.

Die Erfindung setzt sich zur Aufgabe, einen Teigstrang so herzustellen, dass auf den Teig kein Druck, außer seinem Eigengewicht, ausgeübt wird, sodass der Teig absolut schonend behandelt wird und eine Umformung des Teiges, etwa durch eine anfängliche Unterteilung und dann Wiedervereinigung von Teigportionen, und die damit verbundene Verschlechterung der Qualitätskriterien des Teiges vermieden wird. Außerdem soll der konstruktive Aufwand gering sein. Die Erfindung löst diese Aufgabe dadurch, dass die Ausflussöffnung vom Behälter und von einer zumindest einen Teil des Bodens des Behälters bildenden Schneidscheibe berandet ist, die ebenfalls zu einer Umlaufbewegung in der gleichen Richtung wie der Behälter angetrieben ist. Eine so gebildete Austrittsöffnung für den Teig behält ihre Lage bei, wird jedoch zufolge der Umlaufbewegungen des Behälters und der Schneidscheibe stets von anderen Umfangsabschnitten der Behälterwand bzw. des Schneidscheibenumfanges berandet. Die Ausflussöffnung wirkt ähnlich wie ein Schälvorgang auf den aus dem Behälter ausfließenden Teig und es ergibt sich eine absolute Teigschonung, da auf den Teig kein Druck, außer dem Eigengewicht des Teiges, ausgeübt wird. Der Teig wird weder gedrückt bzw. gepresst noch umgeformt, sodass die für solche Vorgänge erforderlichen baulichen Maßnahmen entfallen. Eine solche Vorrichtung ist für Teige der unterschiedlichsten Beschaffenheit verwendbar, also sowohl für Weiß-Teige als auch für Misch- und Roggen-Teige. Der erhaltene Teigstrang kann für die Weiterverarbeitung in unterschiedlichster Art genutzt werden, z.B. für die Produktion von Brot, Kleingebäck, Baguettes oder Ciabatta. Besonders vorteilhaft ist, dass die auf den Teig ausgeübte Belastung so gering ist, dass in den meisten Fällen eine Vorgärung des Teigmateriales entfallen kann, was eine wesentliche Ersparnis an Zeit und Produktionskosten bedeutet.

Gemäß einer bevorzugten Ausführungsform der Erfindung beranden der Behälter und die Schneidscheibe eine im Wesentlichen sichelförmige Ausflussöffnung, welche Form ähnlich einer Schere wirkt und besonders günstig ist für eine teigschonende, einem Schälvorgang ähnliche, Abtrennung des Teigstranges von der das Ausgangsmaterial bildenden Teigmasse.

Eine besonders günstige Ausführungsform der Erfindung besteht darin, dass der Behälter unten eine kreisförmige Öffnung hat, die durch eine kreisförmige Schneidscheibe bis auf die Austrittsöffnung abgedeckt ist, wobei die Schneidscheibe gleich groß wie die Öffnung des Behälters ist, jedoch zu dieser exzentrisch und achsparallel liegt. Der konstruktive und platzmäßige Aufwand hiefür ist gering.

Besonders teigschonend wirkt die erfindungsgemäße Vorrichtung dann, wenn der Behälter und die Schneidscheibe mit der gleichen Umfangsgeschwindigkeit umlaufen, da dann keinerlei Reibung auf den Teig ausgeübt wird.

Eine Veränderung der Breite des erhaltenen Teigstranges ist im Rahmen der Erfindung in einfacher Weise dadurch möglich, dass die Schneidscheibe relativ zum Behälter zwecks Veränderung der Größe der Ausflussöffnung verstellbar ist. Durch zweckentsprechende Wahl von Größe und/oder Gestalt der Ausflussöffnung lassen sich auch Teigstränge in Bandform herstellen, auch sehr dünne Teigbänder.

Bei sinnvoller Bauweise lassen sich durch die erfindungsgemäße Vorrichtung Austragsleistungen von etwa 0,2 bis etwa 10 m/min erzielen.

Das erfindungsgemäße Verfahren zur teigschonenden Herstellung eines Teigstranges aus einer in einem Behälter befindlichen Teigmasse geht aus von einer Vorgangsweise, bei welcher die Teigmasse aus dem zur Drehbewegung um seine Achse angetriebenen Behälter nach unten durch eine Ausflussöffnung ausfließen gelassen wird. Das erfindungsgemäße Verfahren ist dadurch gekennzeichnet, dass der Behälter und eine an ihm anliegende, die Ausflussöffnung berandende Schneidscheibe kontinuierlich in der gleichen Richtung so umlaufen gelassen werden, dass der Teigstrang aus der Teigmasse kontinuierlich in einem von der Ausflussöffnung gebildeten Scherspalt abgeschnitten wird. Zweckmäßig wird hierbei so vorgegangen, dass der Behälter und die Schneidscheibe mit gleicher Umfangsgeschwindigkeit umlaufen gelassen werden. Eine solche Vorgangsweise ist einfach durchführbar und zu überwachen und ergibt eine besonders teigschonende Behandlung.

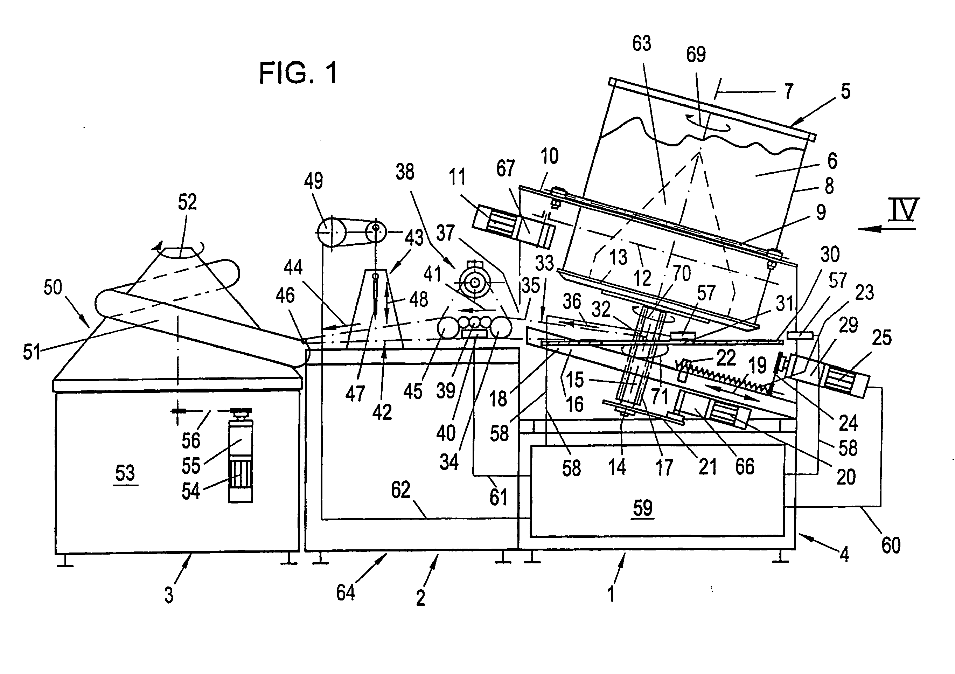

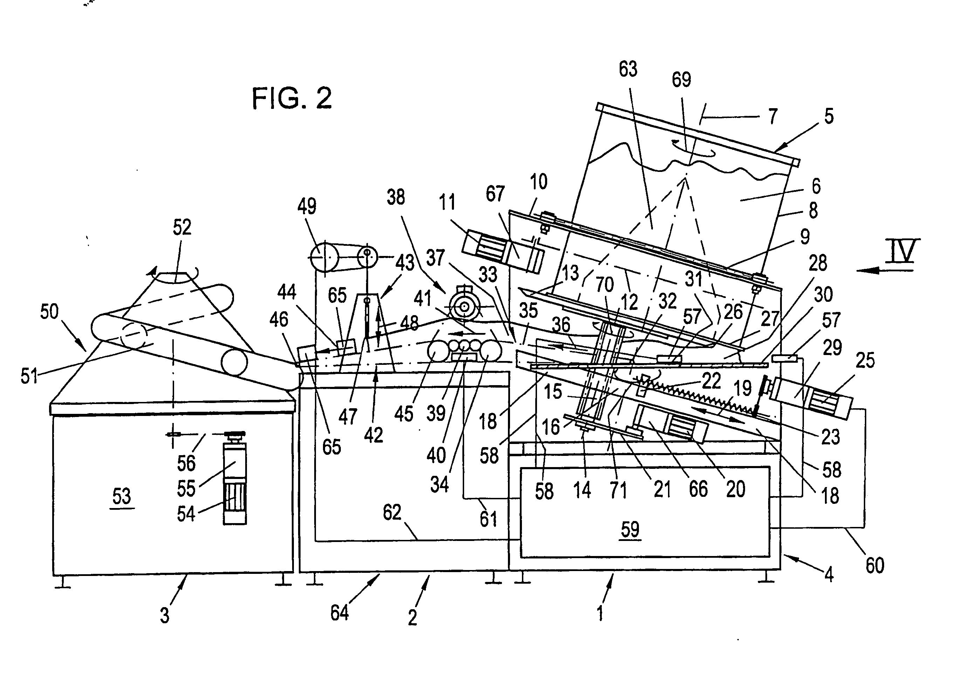

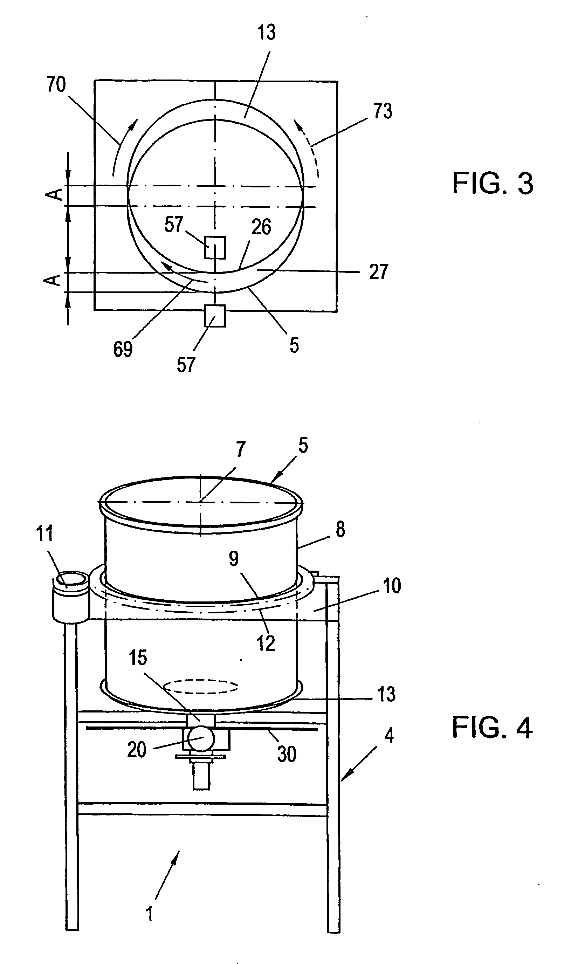

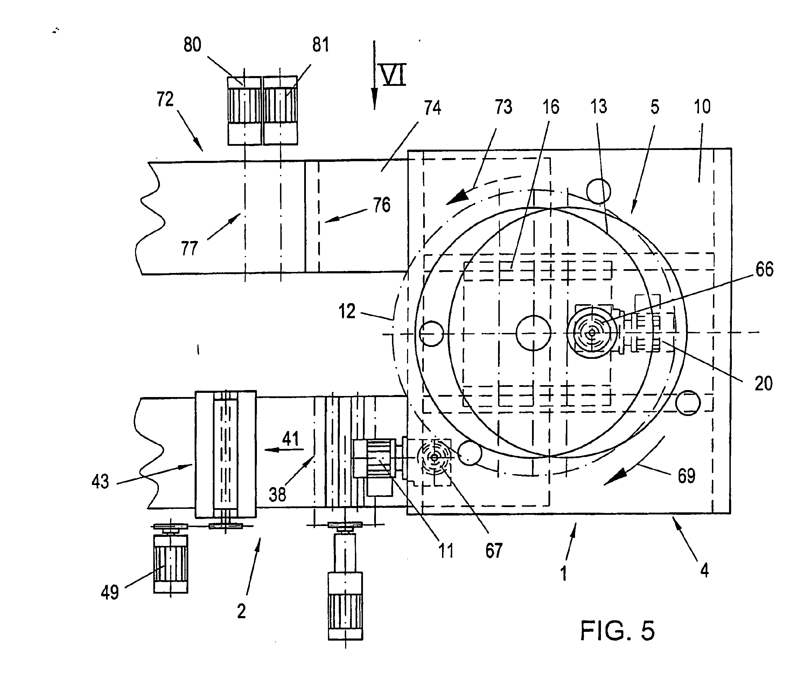

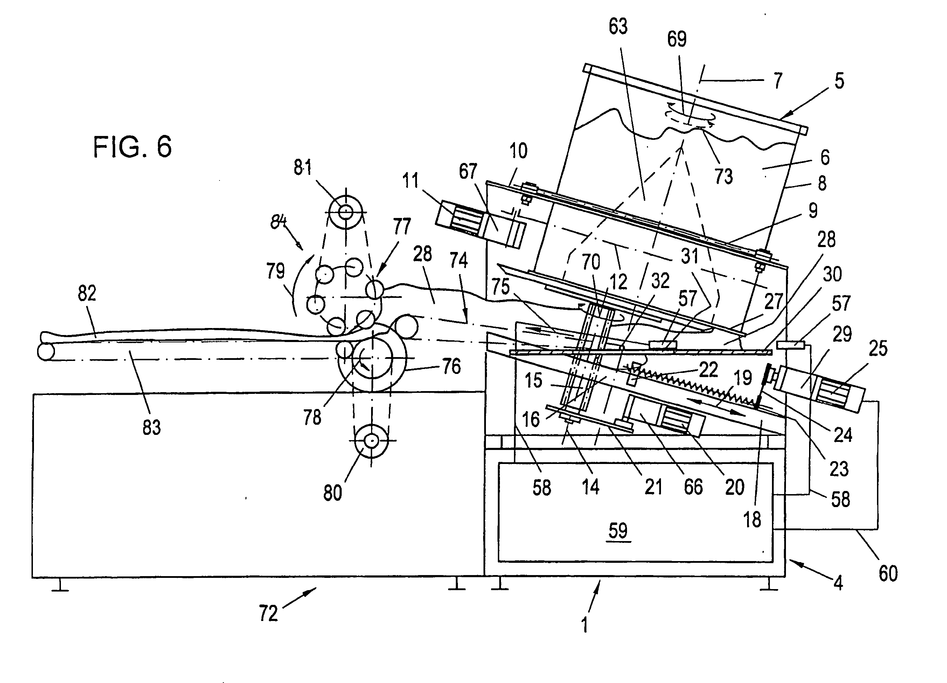

Weitere Kennzeichen und Vorteile der Erfindung ergeben sich aus der Beschreibung von Ausführungsbeispielen der erfindungsgemäßen Vorrichtung, welche in der Zeichnung schematisch dargestellt sind. Fig. 1 zeigt eine erste Ausführungsform der Vorrichtung, teilweise im Vertikalschnitt, bei geschlossener Ausflussöffnung, also während der anfänglichen Befüllung des Behälters. Fig. 2 zeigt dieselbe Vorrichtung während des Betriebes, also bei geöffneter Ausflussöffnung. Fig. 3 zeigt schematisch die Sichelform der von der Behälteröffnung und der Schneidscheibe berandeten Ausflussöffnung. Fig. 4 ist eine Seitenansicht der Vorrichtung in Richtung des Pfeiles IV der Fig. 1 bzw. 2, wobei einzelne Details der besseren Übersichtlichkeit halber weggelassen sind. Fig. 5 ist eine Draufsicht auf eine zweite Ausführungsform der Vorrichtung. Fig. 6 ist eine Seitenansicht in Richtung des Pfeiles VI der Fig. 5.

Die Vorrichtung nach den Fig. 1 und 2 hat im wesentlichen drei Abschnitte: Im ersten Abschnitt 1 wird der Teigstrang hergestellt und im zweiten Abschnitt 2 wird der erhaltene Teigstrang in Portionen vorbestimmten Gewichtes unterteilt, die im dritten Abschnitt 3 weiter bearbeitet, z.B. rundgewirkt, werden. Der erste Abschnitt 1 hat ein Gestell 4, in welchem ein Behälter 5 für den zu verarbeitenden Teig 6 vorgesehen ist. Der Behälter 5 ist kreiszylindrisch ausgebildet, hat jedoch keinen eigenen Bogen. Er ist um seine geneigt angeordnete Achse 7 im Gestell 4 drehbar gelagert. Hiezu trägt der Behälter 5 an seinem Mantel 8 einen Lagerflansch 9, mit welchem er an der schräg angeordneten Deckwand 10 des Gestelles 4 gelagert ist. Der Antrieb zur Umlaufbewegung des Behälters 5 in Richtung des Pfeiles 69 erfolgt von einem am Gestell 4 befestigten Motor 11 mit Getriebe 67, dessen Abtriebswelle bewegungsschlüssig mit einem am Mantel 8 des Behälters 5 befestigten Zahnkranz 12 zusammenwirkt.

Am unteren Ende des Mantels 8 des Behälters 5 liegt eine als Schneidscheibe 13 ausgebildete Bodenplatte an, welche vorzugsweise Kreisform hat und etwa so groß ist wie die untere Öffnung des Behältermantels 8. Diese Schneidscheibe 13 ist relativ zum Behälter 5 normal zur Richtung der Achse 7 einstellbar verschiebbar, wobei ihre Ebene normal steht auf die Achse 7. Die Schneidscheibe 13 ist ebenfalls zur Umlaufbewegung in Richtung des Pfeiles 70 um ihre mittige Achse 14 angetrieben. Hiezu trägt die Schneidscheibe 13 eine Welle 15, deren Lagerung 17 von einem Schlitten 16 getragen wird, der in einer schräg angeordneten Führung 18 des Gestelles 4 in Richtung des Doppelpfeiles 19 hin und her verschiebbar ist. Die Umlaufbewegung der Schneidscheibe 13 ist gleich gerichtet und erfolgt mit annähernd der gleichen Umfangsgeschwindigkeit (± 15 %) wie jene des Behälters 5. Der Antrieb erfolgt von einem vom Schlitten 16 getragenen Motor 20 mit Getriebe 66 über einen Kettentrieb 21.

Der Schlitten 16 trägt einen Gewindeblock 22, dessen Gewinde auf einer Spindel 23 sitzt, deren anderes Ende drehbar, jedoch nicht längsverschieblich, an der Führung 18 befestigt ist. Die Spindel 23 kann in beliebiger Art, z.B. mittels eines Kettentriebes 24, von einem am Gestell befestigten Motor 25 mit Getriebe 29 verdreht werden, wodurch der Schlitten 16 und damit die von ihm getragene Welle 15 samt der auf ihr sitzenden Schneidscheibe 13 in Richtung des Doppelpfeiles 19 einstellbar relativ zum Behälter 5 verlagerbar ist.

In der in Fig. 1 dargestellten Ausgangsstellung schließt die Schneidscheibe 13 die untere Öffnung des Behälters 5 zur Gänze ab. Diese Position entspricht der anfänglichen Stellung, in welcher der Behälter 5 mit Teig 6 befüllt wird. Durch Verschiebung der Schneidscheibe 13 relativ zum Behälter 5 mittels des Motors 25 kann die Schneidscheibe in die in Fig. 2 dargestellte Arbeitsstellung gebracht werden, in welcher ihr Umfang 26 zusammen mit dem Umfang des Behältermantels 8 eine sichelförmige Ausflussöffnung 27 für den im Behälter 5 befindlichen Teig 6 begrenzt. Zufolge der synchronen Umlaufbewegungen des Behälters 5 und der Schneidscheibe 13 ist diese Ausflussöffnung 27 stets von anderen Umfangsabschnitten des Behälters 5 bzw. der Schneidscheibe 13 berandet, behält jedoch ihre örtliche Lage stets bei. Durch Verschiebung der Schneidscheibe 13 relativ zum Behälter 5 kann die Größe der Ausflussöffnung 27 verstellt werden, um sich an die gewünschte Breite des herzustellenden Teigstranges bzw. an unterschiedliche Teigqualitäten anpassen zu können. Wie aus Fig. 3 ersichtlich ist, ist die sichelförmige Ausflussöffnung 27 in der Mitte am breitesten, diese Breite nimmt gegen die beiden Enden bis auf den Nullwert ab. Die die Ausflussöffnung 27 berandenden Abschnitte des Behälters 5 und der Schneidscheibe 13 wirken als Schere, welche kontinuierlich aus dem zu verarbeitenden Teig 6 einen Teigstrang 28 abschält, der durch die Ausflussöffnung 27 austritt. Seine Breite entspricht im wesentlichen der größten Weite A der Ausflussöffnung 27 (Fig. 3). Bei zweckmäßig gleichem Durchmesser des unteren Behälterrandes 5 und der Schneidscheibe 13 ist diese Weite A gleich der Exzentrizität, mit welcher in der in Fig. 2 dargestellten Arbeitsstellung die Achse 14 der Schneidscheibe 13 exzentrisch und achsparallel in Bezug auf die Behälterachse 7 angeordnet ist. Wie ersichtlich, kann durch Verstellung der Schneidscheibe 13 diese Teigbandbreite A verändert werden.

Der aus der Ausflussöffnung 27 austretende Teigstrang 28 wird von einem unterhalb des Behälters 5 angeordneten Transferorgan übernommen und abtransportiert. Dieses Transferorgan kann ein Förderband sein, zweckmäßig ist das Transferorgan jedoch als Transferscheibe 30 ausgebildet, die horizontal angeordnet und zur Drehbewegung um ihre mittige Achse in Richtung des Pfeiles 71 durch einen nicht dargestellten Antrieb angetrieben ist. Die Transferscheibe 30 hat eine mittige Öffnung 31, welche von der Welle 15 und deren Lagerung 17 mit so großem Spiel durchsetzt ist, dass in allen Drehstellungen der Transferscheibe 30 die erwähnte Verlagerung der Schneidscheibe 13 im maximalen Ausmaß möglich ist. Durch die Drehbewegung der Transferscheibe 30 wird der aus der Ausflussöffnung 27 austretende Teigstrang 28 seitlich um die Welle 15 zur Aufnahmekante 32 eines Übergabeorganes 33 geführt, welches als ein um die Aufnahmekante 32 und eine Umlenkrolle 34 geführtes Krabbelband 35 ausgebildet ist, das von der Umlenkrolle 34 zur Umlaufbewegung in Richtung des Pfeiles 36 angetrieben ist. Das Übergabeorgan 33 führt den an der Aufnahmekante 32 übernommenen Teigstrang 28 durch eine Öffnung 37 aus dem Gestell 4 des Anlagenabschnittes 1 heraus und übergibt ihn an eine Verwiegeeinrichtung 38, welche am Gestell 64 des Anlagenabschnittes 2 angeordnet ist. Diese Verwiegeeinrichtung 38 kann beliebiger Bauart sein, z.B. ausgebildet mit Verwiegerollen 39, unter denen ein Wiegesensor 40 angeordnet ist. Bauart und Funktion einer solchen Verwiegeeinrichtung 38 sind bekannt und bedürfen daher hier keiner näheren Erläuterung. Die Verwiegeeinrichtung 38 fühlt das Gewicht des in Richtung des Pfeiles 41 laufenden Teigstranges 28 ab und übergibt den Teigstrang an ein Förderband 42, welches unterhalb einer Teigteileinrichtung 43 in Richtung des Pfeiles 44 durchläuft und über eine Umlenkrolle 45 und eine Ablegekante 46 geführt ist. Über die Umlenkrolle 45 erfolgt der Antrieb. Die Teigteileinrichtung 43 hat ein nach Art einer Guillotine ausgebildetes Messer 47, das in Richtung des Doppelpfeiles 48 von einem Antrieb 49 angetrieben wird. Das Förderband 42 übergibt an der Ablegekante 46 die abgeschnittenen Teigportionen 65 an den als Rundwirkeinrichtung 50 ausgebildeten dritten Anlagenabschnitt 3. Diese Rundwirkeinrichtung 50 kann beliebiger Bauart sein, im dargestellten Ausführungsbeispiel ist sie als Kegelwirker 51 ausgebildet, dessen Kegel von einem im Gestell 53 angeordneten Motor 54 mit Getriebe 55 über einen Kettentrieb 56 in Richtung des Pfeiles 52 zur Drehbewegung angetrieben wird.

Die in horizontaler Richtung annähernd in radialer Richtung des Behälters 5 gemessene Breite des Teigstranges 28 ist in erster Linie durch die maximale Breite A des die Ausflussöffnung 27 bildenden Spaltes (Fig. 3) zwischen der Schneidscheibe 13 und dem Behälter 5 bestimmt. Um diese Teigstrangbreite auf ein vorbestimmtes Maß einstellen bzw. korrigieren zu können, sind über der Transferscheibe 30 zwei im Abstand voneinander angeordnete Sensoren 57 angeordnet, die zu beiden Seiten des aus der Ausflussöffnung 27 austretenden Teigstranges liegen, und auf dessen in der erwähnten Richtung gemessene Breite ansprechen. Wenn sich die Füllstandhöhe des Teiges 6 im Behälter 5 ändert, so ändert sich auch der Druck auf den Teig, welcher das Ausfließen des Teiges 6 durch die Ausflussöffnung 27 bewirkt. Diese Änderung wird über die Sensoren 57 abgefühlt und diese Sensoren 57 veranlassen eine Veränderung der die Größe der Ausflussöffnung 27 bestimmenden Lage der Schneidscheibe 13. Hiezu sind die Sensoren 57 über Leitungen 58 an eine im Gestell 4 angeordnete Steuerschaltung 59 angeschlossen, welche über eine Leitung 60 die für die erwähnte Veränderung der Ausflussöffnung 27 erforderliche Steuerung des Motors 25 bewirkt.

Die Steuerschaltung 59 kann auch für die Steuerung der Teigteileinrichtung 43 herangezogen werden. Hiezu ist das vom Wiegesensor gelieferte Signal der Verwiegeeinrichtung 38 über eine Leitung 61 an die Steuerschaltung 59 gelegt, welche über eine Leitung 62 den Antrieb 49 des Messers 47 steuert. Um Teigportionen 65 gleichen Gewichtes zu erhalten, welche der Rundwirkeinrichtung 50 zugeführt werden, arbeitet die Steuerschaltung 59 wie folgt: Die Teigstrangbreite wird über die Sensoren 57 überwacht und konstant gehalten. Die Einhaltung eines bestimmten Gewichtes der Teigportion ist daher in einfacher Weise dadurch möglich, dass an der Teigteileinrichtung 43 eine solche Teigstranglänge durchtransportiert wird, bis das gewünschte Gewicht der Teigportion erzielt ist, worauf abgeschnitten wird. Die Längenmessung, welche dem vorbestimmten Teigportionengewicht entspricht, wird über die Verwiegeeinrichtung 38 durchgeführt, die entsprechende Steuerung besorgt die Steuerschaltung 59.

Zweckmäßig ist im Behälter 5 ein Leitorgan, insbesondere ein Kegel 63, angeordnet, welches aus der in den Behälter eingekippten Teigcharge einen Teigring formt, welcher dann durch die von der Ausflussöffnung 27 gebildete Schere fließt.

Die in den Fig. 5 und 6 dargestellte Ausführungsvariante hat zusätzlich zum Anlageabschnitt 2 noch einen weiteren Anlageabschnitt 72 für die Weiterverarbeitung des von der Transferscheibe 30 aus der Ausflussöffnung 27 übernommenen Teigstranges, wobei die beiden Abschnitte 2, 72 zu beiden Seiten der Achse 7 des Behälters 5 angeordnet sind und, gesehen in Förderrichtung des Teiges, zueinander zweckmäßig parallel liegen. Der Teigstrang wird wahlweise entweder dem Abschnitt 2 zugeführt oder dem Abschnitt 72. Um dies zu erreichen, sind die Drehrichtungen des Behälters 5, der Schneidscheibe 13 und der Transferscheibe 30 umkehrbar, sodass also z.B. der Behälter 5 nicht nur in Richtung des Pfeiles 69 (Fig. 5), sondern auch in Richtung des strichliert eingezeichneten Pfeiles 73 angetrieben werden kann. Wenn der Behälter 5 in Richtung des Pfeiles 69 umlaufen gelassen wird und auch die Umlaufrichtungen der Schneidscheibe 13 und der Transferscheibe 30 in der gleichen Richtung gewählt sind, dann wird der durch die Ausflussöffnung 27 austretende Teigstrang, wie dies im Zusammenhang mit den Fig. 1 bis 4 beschrieben wurde, von der Transferscheibe 30 dem Krabbelband 35 zugeführt und von diesem über die Verwiegeeinrichtung 38 der Teigteileinrichtung 43 zugeführt. Diese Betriebsweise eignet sich für die Produktion von Großbrot aller Teigarten, die Rundwirkeinrichtung 50 kann gegebenenfalls entfallen.

Wird hingegen der Behälter 5 in Richtung des Pfeiles 73 gedreht, also entgegen dem Uhrzeigersinn (gesehen in Fig. 5) und erfolgt auch der Antrieb der Schneidscheibe 13 und der Transferscheibe 30 im gleichen Drehsinn, dann gelangt der aus der Ausflussöffnung 27 auf die Transferscheibe 30 fließende Teigstrang von dieser zu einem weiteren Krabbelband 74 (Fig. 5, 6), welches den Teigstrang 28 in Richtung des Pfeiles 75 zu einer Kalibrierwalze 76 führt, die einer Satellitenwalzenanordnung 77 gegenüber liegt und mit ihr zusammen eine Teigbandformeinrichtung 84 bildet. Die Kalibrierwalze 76 bzw. die Satellitenwalzenanordnung 77 sind in Richtung der Pfeile 78 bzw. 79 von Motoren 80 bzw. 81 zum Umlauf angetrieben. Aus dem von der Satellitenwalzenanordnung 77 und der Kalibrierwalze 76 gebildeten Spalt tritt der Teig in verdünnter Form, also als Teigband 82, aus und wird durch ein Förderband 83 der weiteren Verarbeitung zugeführt, gegebenenfalls einer Rundwirkeinrichtung. Diese Weiterverarbeitung des durch die Ausflussöffnung 27 erhaltenen Teiges eignet sich insbesondere für die Herstellung von Kleingebäck, z.B. Ciabatta, Baguettes oder Semmeln.

Die dargestellte geneigte Lage des Behälters 5 ist nicht zwingend, der Behälter 5 kann auch mit vertikaler Achse 7 angeordnet sein. Ebenso sind stärker geneigte Lagen bis zu einer fast horizontalen Lage der Achse 7 möglich.

Die Befüllung des Behälters 5 kann kontinuierlich oder chargenweise erfolgen, eine Vorportionierung der zu verarbeitenden Teigmenge 6 ist nicht erforderlich.

## Patentansprüche

1. Vorrichtung zur teigschonenden Herstellung eines Teigstranges (28) aus einer in einem zur Drehbewegung um seine Achse (7) angetriebenen Behälter (5) befindlichen Teigmasse, für die der Behälter (5) unten eine Ausflussöffnung (27) hat, welche Ausflussöffnung von einer zumindest einen Teil des Bodens des Behälters (5) bildenden Scheibe berandet ist, die ebenfalls zu einer Umlaufbewegung angetrieben ist, ***dadurch gekennzeichnet,* dass** die Ausflussöffnung (27) auch vom Behälter (5) berandet ist und die Scheibe als Schneidscheibe (13) angeordnet ist, deren Umlaufbewegung eine gleiche Richtung wie die des Behälters (5) hat.

2. Vorrichtung nach Anspruch 1, **dadurch gekennzeichnet, dass** der Behälter (5) und die Schneidscheibe (13) eine im Querschnitt sichelförmige Ausflussöffnung (27) beranden, wobei gegebenenfalls der Behälter (5) unten eine kreisförmige Öffnung hat, die durch eine kreisförmige Schneidscheibe (13) bis auf die Ausflussöffnung (27) abgedeckt ist, wobei die Schneidscheibe (13) etwa gleich groß wie die Öffnung des Behälters (5) ist, jedoch zu dieser exzentrisch und achsparallel liegt.

3. Vorrichtung nach Anspruch 1 oder 2, **dadurch gekennzeichnet, dass** der Behälter. (5) und die Schneidscheibe (13) mit annähernd gleicher Umfangsgeschwindigkeit umlaufen und/oder dass die Schneidscheibe (13) normal zur Behälterachse (7) angeordnet ist und/oder dass die Schneidscheibe (13) relativ zum Behälter (5) zwecks Veränderung der Größe der Ausflussöffnung (27) verstellbar ist.

4. Vorrichtung nach einem der Ansprüche 1 bis 3, **dadurch gekennzeichnet, dass** unter der Ausflussöffnung (27) ein Transferorgan für den Abtransport des Teigstranges angeordnet ist, wobei gegebenenfalls das Transferorgan von einer zur Umlaufbewegung angetriebenen Transferscheibe (30) gebildet ist, die mittig eine Öffnung (31) hat, welche von einer Welle (15) für die Umlaufbewegung der Schneidscheibe (13) durchsetzt ist, vorzugsweise mit einem für die Verstellung der Schneidscheibe (13) ausreichenden Spiel und/oder oberhalb des Transferorgans zu beiden Seiten der Ausflussöffnung (27) Teigsensoren (57) angeordnet sind, die mit einer Steuerschaltung (59) für die Verstellung der Schneidscheibe (13) verbunden sind.

5. Vorrichtung nach einem der Ansprüche 1 bis 4, **dadurch gekennzeichnet, dass**, in Bewegungsrichtung des Teigstranges (28) gesehen, auf die Ausflussöffnung (27) bzw. auf das Transferorgan eine Verwiegeeinrichtung, z.B. Verwiegerollen (39), folgt, welche eine Teigteileinrichtung (43) steuert oder dass, in Bewegungsrichtung des Teigstranges (28) gesehen, auf die Ausflussöffnung (27) bzw. auf das Transferorgan eine Teigbandformeinrichtung (84), z.B. gebildet von Satellitenwalzen (77), folgt.

6. Vorrichtung nach Anspruch 5, **dadurch gekennzeichnet, dass** zwischen dem Transferorgan (30) und der Verwiegeeinrichtung (38) bzw. der Teigbandformeinrichtung (84) ein Übergabeorgan (33), insbesondere ein Krabbelband (35), angeordnet ist.

7. Vorrichtung nach Anspruch 5 oder 6, **dadurch gekennzeichnet, dass** an die Teigteileinrichtung (43) eine Rundwirkeinrichtung (50) oder eine Langwirkeinrichtung angeschlossen ist.

8. Vorrichtung nach einem der Ansprüche 1 bis 7, **dadurch gekennzeichnet, dass** die Drehrichtungen des Behälters (5) und der Schneidscheibe (13) umkehrbar sind und zu beiden Seiten der Behälterachse auf das Transferorgan unterschiedliche Teigbearbeitungseinrichtungen folgen und/oder dass im Behälter (5) ein Leitorgan (63), insbesondere ein Kegel, angeordnet ist, sodass der im Behälter (5) befindliche Teig zur Ausflussöffnung (27) geleitet wird und/oder dass die Achse (7) des Behälters (5) und die Achse (14), um welche die Schneidscheibe (13) umläuft, zur Horizontalebene geneigt sind.

9. Verfahren zur teigschonenden Herstellung eines Teigstranges aus einer in einem zur Drehbewegung um seine Achse angetriebenen Behälter befindlichen Teigmasse, wobei die Teigmasse aus dem Behälter nach unten durch eine Ausflussöffnung ausfließen gelassen wird, **dadurch gekennzeichnet, dass** der Behälter und eine an ihm anliegende, die Ausflussöffnung berandende Schneidscheibe kontinuierlich in der gleichen Richtung umlaufen gelassen werden, sodass der Teigstrang aus der Teigmasse kontinuierlich in einem von der Ausflussöffnung gebildeten Scherspalt abgeschnitten wird.

10. Verfahren nach Anspruch 9, **dadurch gekennzeichnet, dass** der Behälter und die Schneidscheibe mit der gleichen Umfangsgeschwindigkeit umlaufen gelassen werden und/oder dass Größe und/oder Form des Scherspaltes in Abhängigkeit von den Abmessungen und/oder der Beschaffenheit des erhaltenen Teigbandes verändert werden und/oder dass der aus der Ausflussöffnung nach unten austretende Teigstrang durch ein kontinuierlich bewegtes Transferorgan aufgefangen und der weiteren Verarbeitung zugeführt wird.

## Claims

1. Device for gently forming a pastry strand (28) from a pastry mass in a recipient (5), which is driven to a rotary movement about its axis (7), said recipient (5) having a discharge opening (27) at its lower side for said pastry mass, wherein said discharge opening is edged by a disk, that forms at least part of the bottom of said recipient (5), and which is also driven to a rotary movement, ***characterised in* that** the discharge opening (27) is also edged by said recipient (5), and said disk is arranged as a cutting disk (13), the rotary movement of which has the same direction as that of the recipient (5).

2. Device according to claim 1, **characterised in that** said recipient (5) and said cutting disk (13) edge a discharge opening (27), which is sickle shaped in cross-section, the recipient (5) at its lower side, having optionally a circular opening which is covered, with exception of the discharge opening (27), by a circular cutting disk (13), said cutting disk (13) being about equally large as the opening of said recipient (5), but being eccentric and paraxial thereto.

3. Device according to claim 1 or 2, **characterised in that** said recipient (5) and said cutting disk (13) rotate with approximately equal circumferential speed and/or that said cutting disk (13) is normal to the recipient's axis (7) and/or that said cutting disk (13) is adjustable relative to said recipient (5) for varying the size of said discharge opening (27).

4. Device according to any of claims 1 to 3, **characterised in that** a transfer member for the removal of the pastry strand is arranged below said discharge opening (27), the transfer member being optionally formed by a transfer disk (30) driven to a rotary movement and having a central opening (31) which is penetrated by a shaft (15) for the rotary movement of said cutting disk (13), preferably comprising a play sufficient for adjusting said cutting disk (13) and/or that pastry sensors (57) are arranged above said transfer member at both sides of said discharge opening (27) which are connected to a control circuit (59) for adjusting said cutting disk (13).

5. Device according to any of claims 1 to 4, **characterised in that** a weigh out device, e.g. weigh out rollers (39), follows the discharge opening (27) or the transfer member, when seen in the direction of movement of said pastry strand (28), which controls a dough divider (43), or that a dough band forming device (84), e.g. formed by satellite cylinders (77), follow said discharge opening (27) or said transfer member, when seen in the direction of movement of said pastry strand (28).

6. Device according to claim 5, **characterised in that** a delivering member (33), particularly a crawling belt (Krabbelband) (35), is arranged between said transfer member (30) and said weigh out device (38) or the pastry band forming device (84).

7. Device according to claim 5 or 6, **characterised in that** a round rounder (50) or a longitudinal rounder joins said dough divider (43).

8. Device according to any of claims 1 to 7, **characterised in that** the directions of rotation of said recipient (5) and of said cutting disk (13) are reversible, and that different dough treating means at both sides of the recipient's axis follow said transfer member and/or that a guiding element (63), particularly a cone, is arranged in said recipient (5) so that dough situated within said recipient (5) is guided towards said discharge opening (27) and/or that the axis (7) of the recipient (5) and the axis (14), about which said cutting disk (27) rotates, are inclined to a horizontal plane.

9. Method for gently forming a pastry strand from a pastry mass in a recipient, which is driven for a rotary movement about its axis, said pastry mass being allowed to flow from said recipient downwards through a discharge opening, **characterised in that** said recipient and a cutting disk, which engages it and edges said discharge opening, are permitted to rotate continuously in the same direction so that said pastry strand is continuously cut off from said pastry mass in a shearing gap formed by said discharge opening.

10. Method according to claim 9, **characterised in that** said recipient and said cutting disk are caused to rotate with the same circumferential velocity and/or that the size and/or the shape of the shearing gap are adjusted as a function of the dimensions and/or of the nature of the dough band obtained and/or that the pastry strand exiting downwards from said discharge opening is collected by a continuously moving transfer member and is supplied to further processing.

## Revendications

1. Dispositif de production d'un boudin de pâte (28) d'une masse de pâte, sans abîmer la pâte, située dans un récipient (5) entraîné à un mouvement rotatif autour de son axe (7), pour laquelle le récipient (5), à son côté bas, a un orifice d'écoulement (27), ledit orifice d'écoulement étant bordé par une disque, qui forme au moins en part le fond du récipient (5), et qui est aussi entraînée à un mouvement rotatif, **caractérisé en ce, que** l'orifice d'écoulement (27) est aussi bordé par le récipient (5), et que la disque est disposé comme disque de coupe (13), dont le mouvement rotatif a le même sens comme ceci du récipient (5).

2. Dispositif selon la revendication 1, **caractérisé en ce, que** le récipient (5) et la disque de coupe (13) bordent un orifice d'écoulement (27), qui, en coupe transversal, a essentiellement une forme de croissant, dans lequel, le cas échéant, le récipient (5) comprend en bas un orifice circulaire, qui est couvert par une disque de coupe (13) circulaire à l'exception de l'orifice d'écoulement (27), la disque de coupe (13) ayant la même dimension comme l'ouverture du récipient (5), mais est située excentriquement à celle-ci et parallèlement à l'axe.

3. Dispositif selon la revendication 1 ou 2, **caractérisé en ce, que** le récipient (5) et la disque de coupe (13) tournent avec approximativement la même vélocité périphérique et/ou que la disque de coupe (13) est disposé normalement à l'axe de récipient (7) et/ou que la disque de coupe (13) est ajustable relativement au récipient (5) pour changer la dimension de l'orifice d'écoulement (27).

4. Dispositif selon une quelconque des revendications 1 à 3, **caractérisé en ce, qu'**un organe de transfert pour l'évacuation du boudin de pâte est disposé au-dessous de l'orifice d'écoulement (27), l'organe de transfert, le cas échéant, étant formé par une disque de transfert (30) entraînée à un mouvement rotatif, qui a une ouverture central (31), qui est traversée par un arbre (15) pour le mouvement rotatif de la disque de coupe (13), préférablement avec un jeu, qui suffit pour l'ajustage de la disque de coupe (13), et/ou que des capteurs de pâte (57) sont disposés au-dessus de l'organe de transfert aux deux côtés de l'orifice d'écoulement (27), et sont reliés avec un circuit de commande (59) pour l'ajustage de la disque de coupe (13).

5. Dispositif selon une quelconque des revendications 1 à 4, **caractérisé en ce, qu'**un dispositif de pesage, par exemple des rouleaux de pesage (39), suit à l'orifice d'écoulement (27) ou à l'organe de transfert, vu en direction de mouvement du boudin de pâte (28), et commande un dispositif de division de pâte (43), ou que, vu en direction de mouvement du boudin de pâte (28), un dispositif de façonnage de bande de pâte (84), par exemple formé par des rouleaux satellites (77), suit à l'orifice d'écoulement (27) ou à l'organe de transfert.

6. Dispositif selon la revendication 5, **caractérisé en ce, qu'**un organe de remise (33), particulièrement une bande de grouillement (Krabbelband) (35), est disposé entre l'organe de transfert (30) et le dispositif de pesage (38) ou le dispositif de façonnage de bande de pâte (84).

7. Dispositif selon la revendication 5 ou 6, **caractérisé en ce, qu'**une bouleuse (50) ou une façonneuse longue est relié au dispositif de division de pâte (43).

8. Dispositif selon une quelconque des revendications 1 à 7, **caractérisé en ce, que** les sens de rotation du récipient (5) et de la disque de coupe (13) peuvent être invertis, et que des dispositifs différents de traitement de pâte suivent à l'organe de transfert aux deux côtés de l'axe de récipient et/ou qu'un organe de guidage (63), particulièrement un cône, est disposé dans le récipient (5), de manière que la pâte situé dans le récipient (5) est guidé à l'orifice d'écoulement (27) et/ou que l'axe (7) du récipient (5) et l'axe (14), autour duquel la disque de coupe (13) tourne, sont inclinés par rapport à un plan horizontal.

9. Procédé de production d'un boudin de pâte sans abîmer la pâte située dans un récipient, qui est entraîné à un mouvement rotatif autour de son axe, dans lequel on permet à la masse de pâte d'écouler du récipient vers le bas à travers d'un orifice d'écoulement, **caractérisé en ce, que** le récipient et une disque de coupe, qui le contacte et borde l'orifice d'écoulement, sont permis de tourner continuellement dans le même sens de manière, que le boudin de pâte est coupé continuellement de la masse de pâte dans une fente tondeuse formée par l'orifice d'écoulement.

10. Procédé selon la revendication 9, **caractérisé en ce, que** le récipient et la disque de coupe sont permis de tourner avec la même vélocité périphérique, et/ou que la dimension et/ou la forme de la fente tondeuse sont changé en fonction des dimensions et/ou de la nature du bande de pâte obtenue, et/ou que le boudin de pâte, qui sort de l'orifice d'écoulement en bas, est capté par un organe de transfert se mouvant continuellement et est fourni à un traitement ultérieur.
